# EUROPEAN PATENT SPECIFICATION

(11) **EP 3 213 948 B1**
(45) Date of publication and mention of the grant of the patent: **04.03.2020**
(21) Application number: 15854126.8
(22) Date of filing: 23.10.2015
(51) Int. Cl.: B60K 35/00, G02B 27/01, B60W 50/00, G09G 5/38

(54) **DISPLAY CONTROL DEVICE AND DISPLAY CONTROL PROGRAM**
ANZEIGESTEUERUNGSVERFAHREN UND ANZEIGESTEUERUNGSPROGRAMM
DISPOSITIF DE COMMANDE D'AFFICHAGE ET PROGRAMME DE COMMANDE D'AFFICHAGE

(30) Priority: 29.10.2014 JP 2014220682
(43) Date of publication of application: 06.09.2017
(73) Proprietor: Panasonic Intellectual Property Management Co., Ltd., Osaka-shi, Osaka 540-6207 (JP)
(72) Inventor: AKITA, Takashi, Osaka-shi Osaka 540-06207 (JP); OBAYASHI, Keiichiro, Osaka-shi Osaka 540-06207 (JP); FUNABIKI, Makoto, Osaka-shi Osaka 540-06207 (JP); KOYAMA, Takayoshi, Osaka-shi Osaka 540-06207 (JP); IMAMURA, Jun, Osaka-shi Osaka 540-06207 (JP)
(74) Representative: Vigand, Philippe
(86) International application number: PCT/JP2015/005335
(87) International publication number: WO 2016/067574

(56) References cited:
- JP-A- 2010 197 493
- JP-A- 2011 123 119
- JP-A- 2014 075 079
- JP-A- 2014 201 197
- US-A1- 2010 253 593
- US-A1- 2011 199 198
- US-A1- 2013 222 212

## Description

### TECHNICAL FIELD

The present invention relates to a display control device and a display control program for controlling the display of information provided to passengers in a vehicle and the like.

### BACKGROUND ART

In recent years, the development of a display system that overlaps and displays warning signs for vehicles and pedestrians, navigation information, and other information on actual scenes using an in-vehicle head-up display (HUD) has been actively performed. In the HUD, an image including navigation information and the like is projected onto the windshield of the vehicle, and a virtual image by reflected light is visible to a driver in the vehicle. Therefore, the driver recognizes navigation information and the like as the virtual image overlapped on an actual scene that is visible through the windshield within a field of view as well as the actual scene. If navigation information is displayed in an appropriate position in response to individual elements (for example, road signs, buildings, etc.) on the actual scene in the HUD, the driver can easily recognize navigation information and the like.

However, in the case of displaying elements on the HUD corresponding to a desired position on the actual scene, if the height of the driver's viewpoint changes depending on the settings such as the driver's seat height and a back angle of the seat, the position of the virtual image in the vertical direction when viewed from the driver's viewpoint changes. The position of the virtual image is a depression angle when the virtual image is viewed from the driver's viewpoint. As a result, a positional relationship between a display range of the HUD and the actual scene will change.

For example, there is a technique disclosed in PTL 1, as a way to change the presentation of information to the driver according to the height of the driver's viewpoint.

The technique in PTL 1 generates video data including a first display object that is displayed in response to a target position in front of the vehicle and a second display object that has different contents from the first display object and is displayed at a different position, and changes a positional relationship between the first display object and the second display object depending on the height difference of the driver's viewpoint. Therefore, it is possible to easily overlap the display contents at a desired position on the actual scene even if the height of the driver's viewpoint changes.

The related technique is also disclosed in PTL 2.

### Citation List

### Patent Literature

PTL 1: Japanese Patent Unexamined Publication No. 2011-123119
PTL 2: Japanese Patent Unexamined Publication No. 7-257228

Further art is disclosed by the document US 2010/0253593 which discloses a display system reflecting the preamble of present claim 1. Other art is known from the documents US 2013/0222212 and US 2011/0199198.

### SUMMARY OF THE INVENTION

The present invention provides a display control device and a display control program for presenting useful information to a passenger even if the height of the passenger's viewpoint (for example, a driver) in a moving object such as a vehicle and the like changes.

The display system according to one aspect of the present invention is defined in the appended claims.

The display control program according to the one aspect of the present invention is further defined in the appended claims and causes a computer to execute process in the display system described above.

According to the present invention, even if the height of the passenger's viewpoint in the moving object changes, it is possible to present useful information to the passenger.

### BRIEF DESCRIPTION OF DRAWINGS

FIG. 1A is a diagram showing a positional relationship (in the case of a high viewpoint) between an actual scene in front of a vehicle viewed from a driver in the vehicle and a display range of an HUD.
FIG. 1B is a diagram showing a positional relationship (in the case of a standard height viewpoint) between the actual scene in front of the vehicle viewed from the driver in the vehicle and the display range of the HUD.
FIG. 1C is a diagram showing a positional relationship (in the case of a low viewpoint) between the actual scene in front of the vehicle viewed from driver in the vehicle and the display range of the HUD.
FIG. 2 is a schematic diagram showing a configuration example of a display system according to an embodiment.
FIG. 3 is a diagram showing how a predetermined subject falls within the display range of the HUD.
FIG. 4 is a diagram showing how the predetermined subject does not fall within the display range of the HUD.
FIG. 5 is a diagram showing an example of a view from the driver's viewpoint (a case where the predetermined subject falls within the display range of the HUD).
FIG. 6 is a diagram showing an example of a view from the driver's viewpoint (a case where the predetermined subject does not fall within the display range of the HUD).
FIG. 7 is a configuration diagram showing a configuration example of a display unit.
FIG 8 is a conceptual diagram showing an adjustment of an angle of a mirror in the display unit.
FIG. 9 is a flowchart showing a display control process by a display control device.
FIG. 10 is a diagram showing an example of a view from the driver's viewpoint (a case where an intersection falls within the display range of the HUD).
FIG. 11 is a diagram showing an example of a view from the driver's viewpoint (a case where the intersection does not fall within the display range of the HUD).
FIG. 12 is a flowchart showing a modification example of the display control process.

### DESCRIPTION OF EMBODIMENTS

Prior to the description of embodiments of the present invention, problems in the conventional techniques will be briefly described.

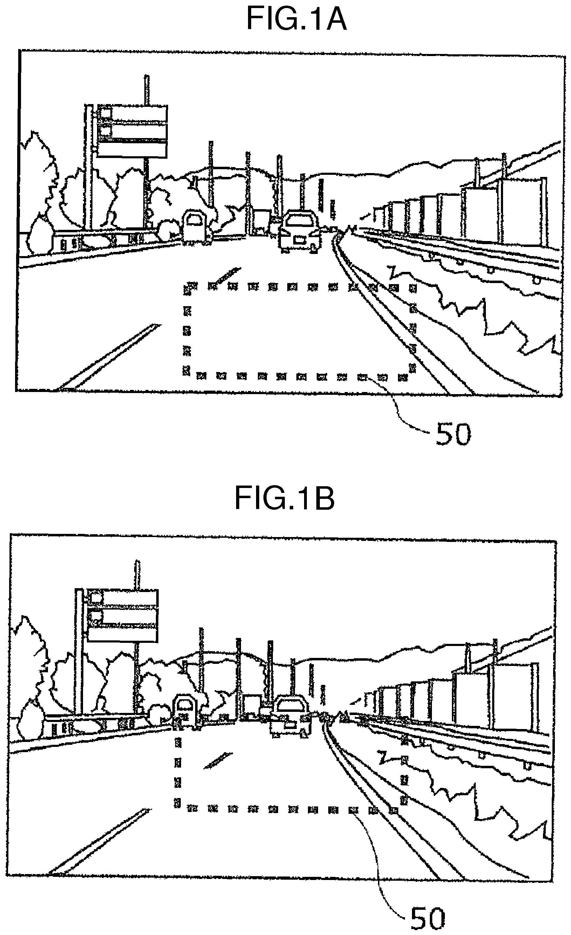

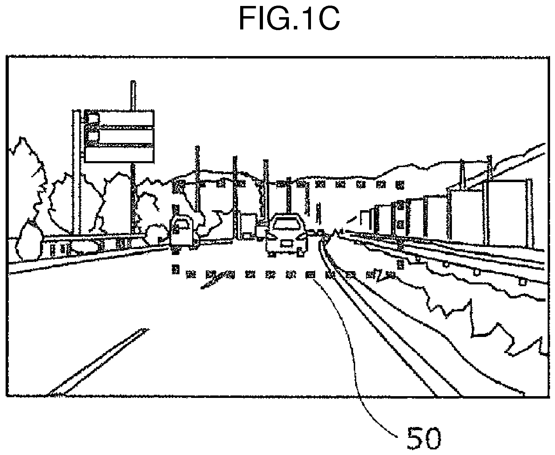

In order to cover the height of the driver's viewpoint, for example, 99% of all the driver's viewpoint positions, it is generally necessary to consider a variation range of approximately 150 mm up and down from the height of a standard viewpoint. In this case, because the depression angle changes when the virtual image is viewed from the driver's viewpoint, the display range of the HUD changes greatly between the position where the viewpoint is the highest and the position where the viewpoint is the lowest, as shown in FIGS. 1A to 1C. FIGS. 1A to 1C are diagrams showing the positional relationship between the actual scene in front of the vehicle viewed from the driver in the vehicle and display range 50 of the HUD. FIG. 1A shows an example of the field of view of the driver with a higher viewpoint than the standard viewpoint, FIG. 1B shows an example of the field of view of the driver with the viewpoint as high as the standard viewpoint, and FIG. 1C shows an example of the field of view of the driver with a lower viewpoint than the standard viewpoint.

In the technique in PTL 1, problems arise in a case where the height of the driver's viewpoint changes greatly from the height of the standard viewpoint like the high viewpoint or low viewpoint described above. The overlapped position of the display object to be displayed corresponding to the position of a target on the actual scene in front of the vehicle is outside the display range of the HUD, and therefore it is not possible to display useful information so that the information is visible to the driver. That is, in the technique of PTL 1, it is not useful to present information in a case where the height of the driver's viewpoint changes.

Hereinafter, embodiments of the present invention will be described with reference to the drawings. Each of the embodiments shown here represents one specific example of the present invention. Accordingly, numerical values, shapes, materials, components, and the disposition and connection of the components as well as the steps and the order of the steps shown in the following embodiments are examples, and the present invention is not limited thereto. The components in the following embodiments, which are not described in the independent claims, are optional components that can be added. Further, each diagram is a schematic diagram and is not necessarily drawn to the strictest.

### (Exemplary Embodiment 1)

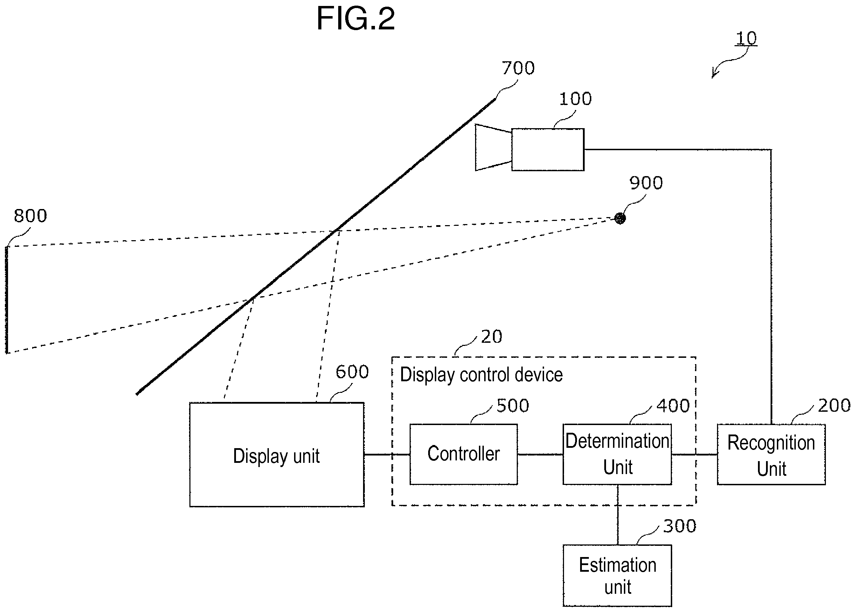

FIG. 2 is a schematic diagram showing a configuration example of display system 10 according to Exemplary Embodiment 1 of the present invention. First, the configuration example of display system 10 according to the present embodiment will be described.

Display system 10 is a display system that includes a display unit (for example, HUD and the like) placed in a moving object such as a vehicle and projects an image showing information on a display medium such as windshield 700 and the like so that virtual image 800 reflecting the information is visible to a passenger with viewpoint 900 in the moving object. The information as the virtual image overlapped with the actual scene is displayed within the field of view of the passenger by display system 10. In the present embodiment, display system 10 is applied to the vehicle, but the moving object is not limited to the vehicle and may be a vessel, an aircraft, or the like. Further, in the present embodiment, an example that the passenger in the moving object is particularly the driver of the vehicle is described, but the passenger is not limited thereto. The display range (that is, the maximum range at which the maximum image can be displayed as the virtual image) of the virtual image displayed within the visual field of the passenger by the projection of the display unit described above is physically limited to a certain extent due to the disposition and the structure of the display unit. The display range of the virtual image is also referred to herein as the display range of the HUD.

As shown in FIG. 2, display system 10 includes sensor 100, recognition unit 200, estimation unit 300, display control device 20 (determination unit 400 and controller 500), display unit 600, and windshield (display medium) 700.

Sensor 100 is placed inside or outside the vehicle and senses the foreground of the driver in the vehicle sequentially (every predetermined time, for example, hundreds of milliseconds, tens of milliseconds, or the like). Sensor 100 is, for example, an image sensor (a camera) for detecting the light in the foreground or the like. Sensor 100 may detect the foreground condition of the driver in the vehicle, and may be a radar that detects the reflection of electromagnetic waves, for example. Sensor 100 transmits the foreground information indicating the sensing result of the foreground to recognition unit 200. The output is performed, for example, at a predetermined time interval.

Recognition unit 200 recognizes the predetermined subject existing in the vicinity of the vehicle (for example, within about 100 meters ahead) in the foreground of the driver in the vehicle based on the foreground information transmitted from sensor 100, and outputs the recognition result information indicating the recognition result. The predetermined subject to be recognized is, for example, a moving object (for example, a vehicle, a person, a bicycle, a motorcycle, and the like), a traffic sign, a white line on a road, a road marking, a curbstone, a guard rail, a traffic light, a telephone pole, and a building. For example, in a case where sensor 100 is a camera, recognition unit 200 recognizes the subject by performing an image process such as pattern matching on the foreground information (that is, the foreground image captured by the camera). Further, for example, in a case where sensor 100 is a radar, recognition unit 200 extracts and recognizes the subject from the foreground information by clustering, machine learning or the like. Since the technique of recognizing the subject in recognition unit 200 is a well-known technique, a detailed explanation will be omitted here. The recognition result information output by recognition unit 200 is, for example, an existence position (X, Y) of a predetermined subject. In a case where there are a plurality of types of predetermined subjects (a moving object, a traffic sign, and the like), the recognition result information may be information associating the type and the existence position of the predetermined subject. For example, the existence position (X, Y) of the predetermined subject is the coordinates in a camera coordinate system with the left and right (lateral) direction of the driver as an X axis and the front and back direction as an Y axis with respect to a point where a sensing camera is installed so as to capture the foreground of the driver in the vehicle. Further, Y at the existence position (X, Y) of the predetermined subject indicates the distance between the vehicle and the predetermined subject in the travelling direction of the vehicle, for example.

Estimation unit 300 estimates the depression angle when the virtual image (an image displayed by display unit 600) is viewed from the driver's viewpoint and outputs the estimated value. Specifically, the value of the depression angle at each viewpoint position is held in advance, the position of the driver's viewpoint is detected by a camera (not shown), and the depression angle is estimated. The estimation of the depression angle is not limited to this method. For example, the position of the driver's viewpoint may be estimated from the angle of a mirror provided in display unit 600, and the depression angle may be estimated based on the result.

The functions of recognition unit 200 and estimation unit 300 described above are stored in memory in a computer or the like including memory and a processor (a central processing unit (CPU)), for example.

The functions are realized by the processor executing the control program. The recognition result information is output by recognition unit 200 sequentially (at a predetermined time interval, for example, hundreds of milliseconds, tens of milliseconds, or the like) corresponding to the sensing of sensor 100. The estimated value of the depression angle is output by estimation unit 300 once or at a regular interval (for example, several seconds, several hundreds of milliseconds), in a timely manner (at the startup of display system 10, or the like).

Display control device 20 acquires information output by recognition unit 200 and estimation unit 300 and controls display unit 600 to generate an image to be displayed (projected to the display medium) sequentially (every predetermined time, for example, hundreds of milliseconds, tens of milliseconds or the like). On the hardware side, display control device 20 is realized by a well-known computer including, for example, memory and a processor with regards to the hardware phase, and includes determination unit 400 and controller 500 as functional components. Each function of determination unit 400 and controller 500 is realized by the processor executing the control program stored in the memory. The memory may be read only memory (ROM) that holds programs and data in advance or random access memory (RAM) that is used for storing data and the like at the time of execution of a program, including nonvolatile memory for example.

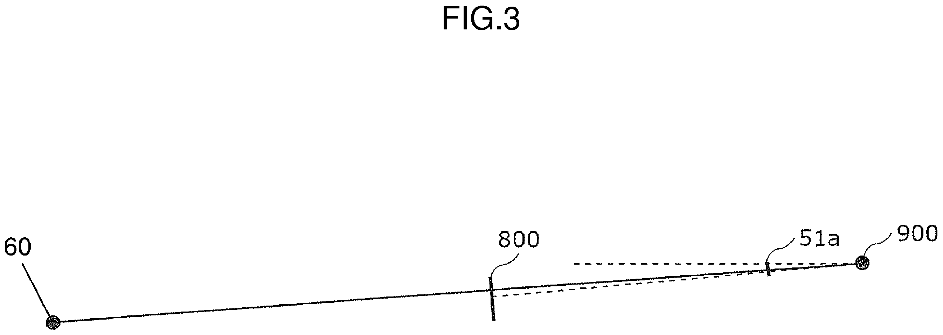

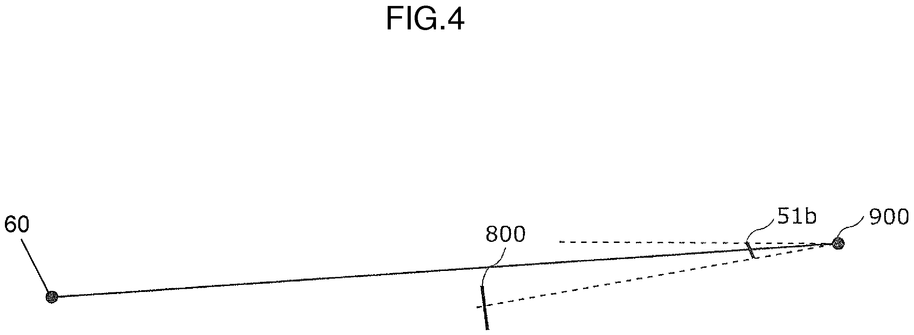

Determination unit 400 acquires the recognition result information output by recognition unit 200 and the estimated value of the depression angle output by estimation unit 300, and determines whether or not the predetermined subject indicated by the recognition result information falls within the display range of HUD based on the estimated value of the recognition result information and the depression angle. Depending on the size of the depression angle of the driver, a distance range of the road surface or the like of the foreground falling within the display range of the HUD changes. Specifically, as shown in FIG. 3, in a case where a straight line connecting the driver's viewpoint 900 and predetermined subject 60 passes through the display range of virtual image 800, determination unit 400 determines that predetermined subject 60 falls within the display range of the HUD. On the other hand, as shown in FIG. 4, in a case where the straight line connecting the driver's viewpoint 900 and predetermined subject 60 does not pass through the display range of virtual image 800, determination unit 400 determines that predetermined subject 60 does not fall within the display range of the HUD. As shown in FIG. 3, in a case where the driver's viewpoint 900 is at a position with depression angle 51a and a case where the driver's viewpoint 900 is at a position with depression angle 51b larger than depression angle 51a as shown in FIG. 4, it changes whether or not predetermined subject 60 is visible in the display range of HUD. Determination unit 400 may determine whether or not the display position of the display object to be displayed around predetermined subject 60 in the virtual image overlapped on the actual scene falls within the display range of the HUD instead of determining whether predetermined subject 60 falls within the display range of the HUD as described above. Determination unit 400 transmits the determination result information indicating the determination result to controller 500.

Controller 500 controls display unit 600 to generate an image to be projected on windshield 700, which is an image to be displayed as a virtual image. Specifically, controller 500 controls display unit 600 so that a different image is generated in display unit 600 respectively for a case where predetermined subject 60 falls within the display range of the HUD and a case where predetermined subject 60 does not fall within the display range of the HUD, based on the determination result information transmitted from determination unit 400.

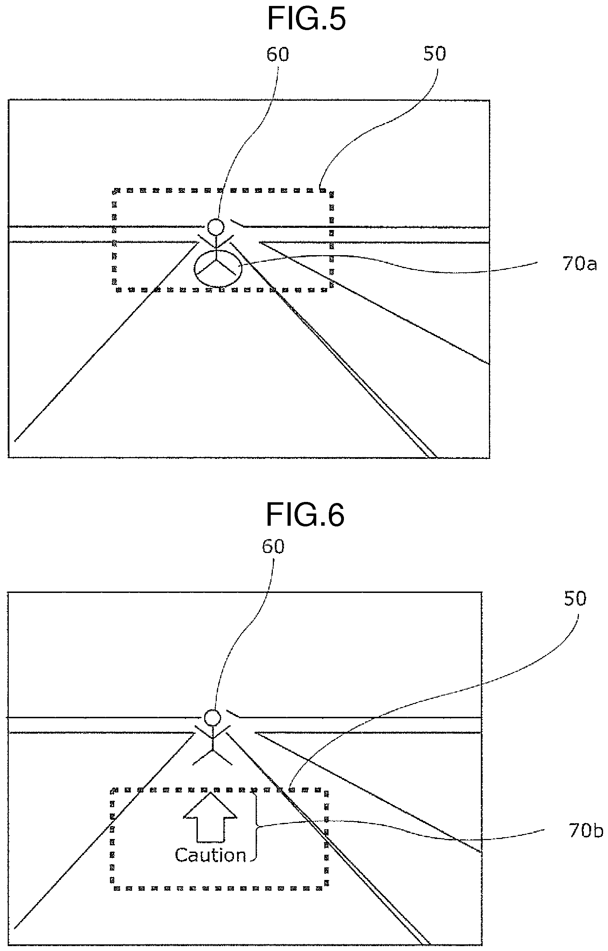

In a case where predetermined subject 60 is determined to fall within the display range of the HUD by determination unit 400, controller 500 controls display unit 600 to generate a predetermined image representing an image in which the display object is overlapped on predetermined subject 60 on the actual scene when displayed on the display medium, as shown in FIG. 5. Controller 500 controls display unit 600 to generate the predetermined image representing an image to be displayed in display range 50 of the HUD when displayed on the display medium. The display object is a component (that is, an image element) of an image formed with a mark such as a character string, a symbol, a figure, an image, or the like, and is predetermined in advance. In the present embodiment, the display object represents a warning for calling attention of the driver about predetermined subject 60. FIG. 5 shows a view from the driver's viewpoint with depression angle 51a, for example, shown in FIG. 3. In FIG. 5, a person as predetermined subject 60 appears in the actual scene, and display object 70a in an oval shape is displayed by being overlapped on the person within display range 50 of the HUD. Since the existence of the person (predetermined subject 60) is emphasized as an object to watch out for by display object 70a, the driver in the vehicle can properly recognize predetermined subject 60.

On the other hand, in a case where determination unit 400 determines that predetermined subject 60 does not fall within the display range of the HUD, controller 500 controls display unit 600 to generate the predetermined image that represents an image indirectly indicating the position of predetermined subject 60 on the actual scene when displayed on the display medium, as shown in FIG. 6. In the case of FIG. 6, unlike the case of FIG. 5, because predetermined subject 60 does not fall within the display range of the HUD when viewed from the driver's viewpoint, and an image cannot be generated so that the display object is displayed by being overlapped on predetermined subject 60, an image indicating the position of predetermined subject 60 by a mark such as an arrow is generated. FIG. 6 shows a view from the driver's viewpoint with depression angle 51b, for example, shown in FIG. 4. In FIG. 6, the point where a person as predetermined subject 60 appears in the actual scene is the same as in FIG. 5, but since the person does not fall within display range 50 of the HUD, display object 70b including an arrow indicating the direction of the person's position and a character string for calling attention is displayed. Here, in a case where predetermined target 60 does not fall within the display range of HUD, controller 500 generates an image including a display object indirectly indicating the position of the subject. However, even if the image is not the display object indirectly indicating the position of the subject, the display object may be any other display object as long as it is a display object that can cause the driver to recognize that it is related with predetermined subject 60. The driver can accurately recognize predetermined subject 60 by the display object.

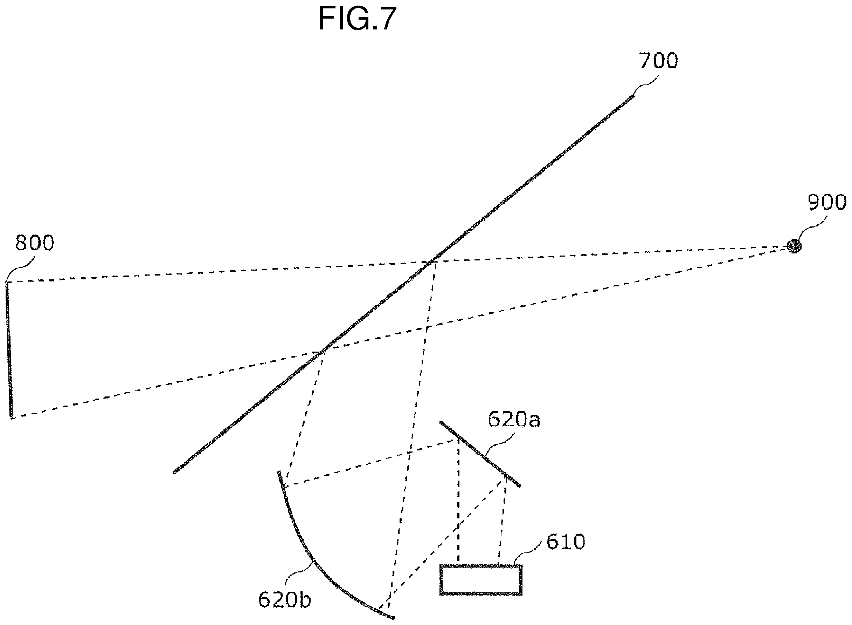

Display unit 600 generates a predetermined image under the control of controller 500 and projects the image on windshield 700. A configuration example of display unit 600 is shown in FIG. 7. Display unit 600 includes, for example, liquid crystal display (LCD) 610, plane mirror 620a, recessed mirror 620b, and an image generation unit (not shown) for generating an image. In display unit 600, an image is displayed on LCD 610. The image displayed on LCD 610 is reflected on plane mirror 620a, magnified by recessed mirror 620b, and projected onto windshield 700.

The image magnified and projected on windshield 700 is visible as virtual image 800 from the driver. At this time, virtual image 800 is displayed by being overlapped on the actual scene that is visible within the field of view of the driver. Virtual image 800 appears at the position (for example, 2 m to 3 m ahead) that is the focus of the driver's line of sight during driving so that the image is recognized by the driver.

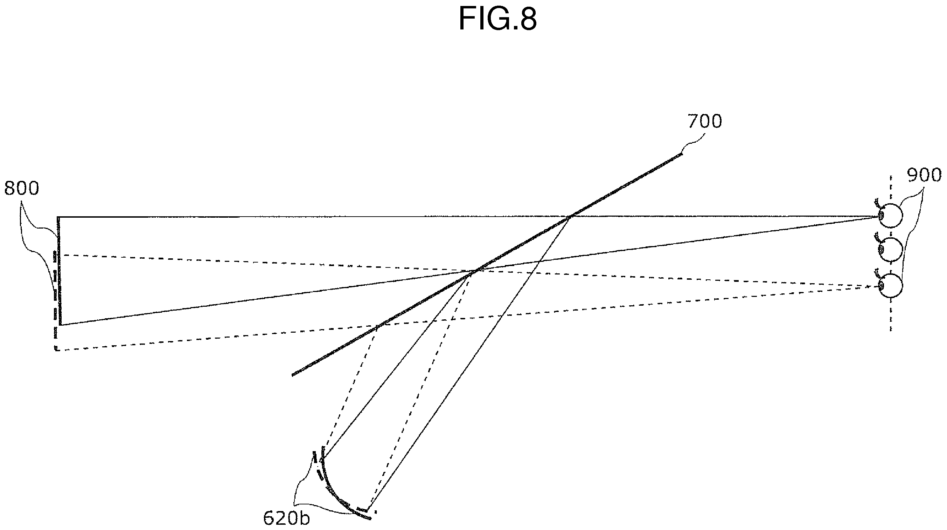

The height of the driver's viewpoint 900 changes depending on the differences of the driver's seat height, a back angle of the seat, and so on. In order to cope with the differences in the height of viewpoint 900, an adjustment unit (not shown) for adjusting the angle of recessed mirror 620b driven by a motor is provided. FIG 8 is a conceptual diagram showing the adjustment of the angle of a mirror in display unit 600. As shown in FIG. 8, by adjusting the angle of recessed mirror 620b, in a case where the seat height is high (solid line in FIG. 8) or the seat height is low (broken line in FIG. 8), the virtual image is visible from the driver's viewpoint. The angle of recessed mirror 620b may be adjusted by, for example, detecting the position of the driver's viewpoint with a camera (not shown) based on the detection result, or by providing an adjustment switch (not shown) according to the operation of the adjustment switch by the driver.

Next, an operation example of display system 10 according to the present embodiment will be described.

In display system 10, recognition unit 200 recognizes the predetermined subject according to the foreground information from sensor 100 at a predetermined time interval, and outputs confirmation result information indicating the existence position of the subject. Estimation unit 300 estimates the depression angle at the driver's viewpoint based on the position of the driver's viewpoint detected by a camera (not shown) or the angle of the mirror of adjusted display unit 600 (recessed mirror 620b or the like) as well as the output of the confirmation result information, and outputs the estimated value of the depression angle. Display control device 20 receives these outputs and executes a display control process for generating an image, and the generated image is displayed by display unit 600.

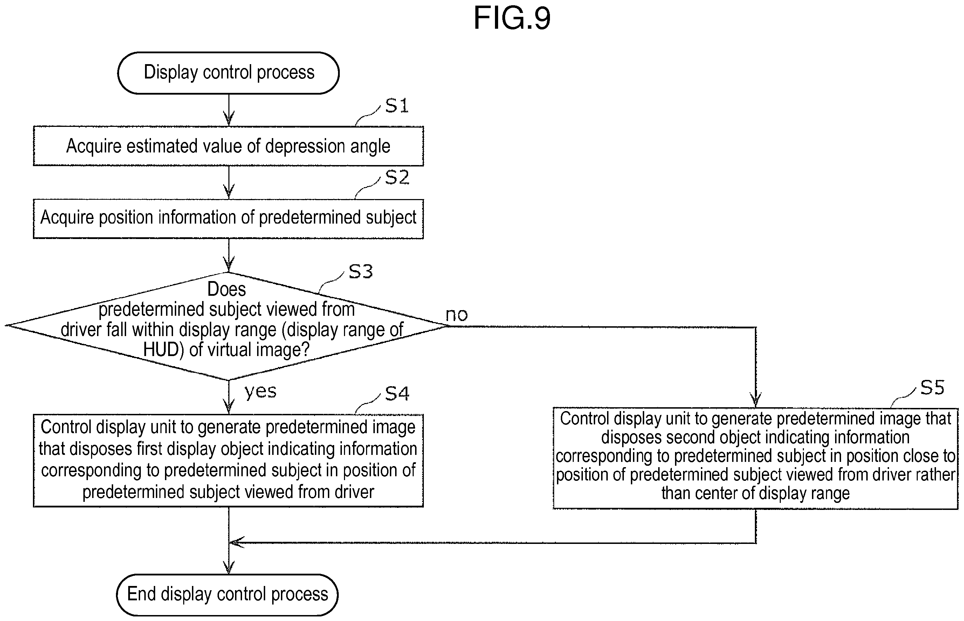

FIG. 9 is a flowchart showing the display control process by display control device 20 according to the present embodiment. The following describes the display control process performed by display control device 20 with reference to FIG. 9. The display control process is repeatedly executed in a predetermined cycle. The cycle is related to a frame rate to supply the predetermined image to display unit 600 (LCD 610), for example, hundreds of milliseconds, tens of milliseconds, or the like.

First, determination unit 400 of display control device 20 acquires the estimated value of the depression angle output from estimation unit 300 (step S1). Further, determination unit 400 acquires the position information of the predetermined subject by acquiring the recognition result information output by recognition unit 200 (step S2).

The determination unit 400 determines whether or not the predetermined subject viewed from the driver falls within the display range of the virtual image, that is, display range 50 of the HUD (step S3), based on the estimated value of the acquired depression angle and the position information of the predetermined subject. The determination result information indicating the determination result is transmitted to controller 500.

With reference to the determination result information, in a case where determination unit 400 determines that the predetermined subject falls within display range 50 of the HUD (step S3: YES), controller 500 controls display unit 600 to generate the first predetermined image that represents the first display object (the first display image) showing the information corresponding to the predetermined subject at a position of the predetermined subject viewed from the driver when displayed on the display medium (step S4), and display unit 600 generates the first predetermined image. The predetermined image is an image of a predetermined size to be displayed on, for example, LCD 610, and the luminance is a predetermined low luminance value (for example, 0) so that the portion where the display object is not disposed is not displayed. Further, the first display object is display object 70a described above (see FIG. 5) showing the information (for example, a figure in an oval shape) corresponding to predetermined subject 60. The position of the first display object in the predetermined image is calculated as the position overlapped on the predetermined subject viewed from the driver, based on the recognition result information and the estimated value of the depression angle. In a case where the recognition result information includes the type of the predetermined subject, the contents of the information indicated by the display object (for example, shape of a figure) to be disposed in the predetermined image for each type may be defined in advance.

Further, in step S3, in a case where determination unit 400 determines that the predetermined subject does not fall within display range 50 of the HUD (step S3: NO), controller 500 controls display unit 600 to generate the second predetermined image that represents the second display object (the second display image) showing the information corresponding to the predetermined subject at a position close to the position of the predetermined subject viewed from the driver rather than the center of the display range when displayed on the display medium (step S5), and display unit 600 generates the second predetermined image. The second display object is different from the first display object in a display manner and, for example, and is display object 70b showing the information (for example, a pair of a figure of an arrow and a character string of "Caution" for calling attention) corresponding to predetermined subject 60 (see FIG. 6). The position of the second display object in the predetermined image is calculated as a position shifted (moved) to the direction of the predetermined subject viewed from the driver compared with the case where the second display object is disposed at the center of the predetermined image based on the estimated value of the recognition result information and the depression angle. Although the shift amount is arbitrary, the second display object may be shifted by the maximum amount possible, for example. In the example of FIG. 6, the second display object is shifted upwards. The shift makes it easy for the driver to recognize that the second display object is related with the predetermined subject.

In response to the control by controller 500 in step S4 or step S5, display unit 600 projects the generated first or second predetermined image on the display medium.

Although the embodiment of the present invention has been described above, the present invention is not limited to Exemplary Embodiment 1, and various modifications are possible. Hereinafter, a modification example will be described.

The configuration of an optical system such as a mirror or a lens in display unit 600 (type and number of mirrors, or the like) may be other than that shown in FIG. 7. Further, the means for outputting images in display unit 600 may be other than an LCD (for example, a laser projector, Liquid Crystal on Silicon (LCOS), or the like).

Display unit 600 projects an image onto windshield 700, but the image may be projected on a combiner which is a half mirror provided separately from windshield 700. Further, display unit 600 may display the image on a transmissive display provided inside or on the surface of windshield 700.

Although the second display object is shifted in the direction of the predetermined subject in step S5 of the display control process described above, the second display object may not be necessarily shifted and may be disposed at an arbitrary position (for example, center) in the predetermined image.

The second display object described above is not limited to display object 70b including a specific mark (a figure of an arrow, or the like) indicating the position of the predetermined subject or the like, and may not be a display object indicating the position of the predetermined subject. Further, the first display object may be disposed at a position overlapped with the predetermined subject, or may be disposed around the predetermined subject. In the case of displaying the first display object at a position overlapped with the predetermined subject, since it is not necessary to indicate the position of the predetermined subject, it is not necessary to include a specific mark indicating the position. In the case of disposing the first display object around the predetermined subject, or the like, a specific mark (such as a figure of an arrow) indicating the position of the predetermined subject may be included in the first display object.

Recognition unit 200 may recognize a plurality of the predetermined subjects at the same time, and determination by determination unit 400 for each of the plurality of the predetermined subjects and generation control of the display object (the first or the second display object) by controller 500, and generation of the predetermined image by display unit 600 may be performed.

The predetermined image described above may include the display object showing various information (speed and other information) necessary for driving.

When displaying the first display object and the second display object described above, information may be conveyed to the driver by voice from a speaker or the like placed on the vehicle. In this case, different sounds may be output when the first display object is displayed and when the second display object is displayed.

The first display object and the second display object described above, may have different colors and luminance, and the like from each other.

The execution order of the procedure of the display control process (see FIG. 9) in display control device 20 described above is not necessarily limited to the order as described above, and the execution order may be changed or a part thereof may be omitted in a range without departing from the scope of the appended claims. Further, all or a part of the procedure of the display control process described above may be realized by hardware or software, or may be realized by a combination of both software and hardware. The process by software is realized by a processor included in a computer or the like, executing the display control program stored in memory. Further, the display control program may be recorded in a recording medium, and distributed or circulated. For example, by installing the distributed control program in a device having a processor and causing the processor of the device to execute the display control program, it is possible to cause the device to perform all or a part of the display control process.

Although it is not required, the computer described above may have an input device, an output device, a reading device that reads information from a recording medium, or a transmitting and receiving device that performs communication via a network. The input device is, for example, an input button or a touch pad. The output device is, for example, a display or a speaker. The recording medium is, for example, a storage device such as a hard disk device or a solid state drive (SSD), digital versatile disk read only memory (DVD-ROM), or universal serial bus (USB) memory. For example, if the display control program described above is recorded on a recording medium such as USB memory, the reading device reads the display control program and stores the program in memory or other storage devices. Further, the transmitting and receiving device may communicate with an external server device storing the display control program via a network and download the display control program from the server device and store the display control program in memory or other storage devices. Display control device 20 may be configured as an integrated circuit.

Thus, according to display system 10 (display control device 20, or the like), even in a case where the variation range of the height of a passenger's viewpoint (for example, a driver or the like) in a moving object such as a vehicle is large, it is possible to present useful information to the passenger.

### (Exemplary Embodiment 2)

Hereinafter, a modified display system, which is obtained by adding a navigation function of a vehicle to display system 10 described in Exemplary Embodiment 1, will be described.

The modified display system includes sensor 100, recognition unit 200, estimation unit 300, a modified display control device, display unit 600, and windshield 700. The same reference numerals as those in Exemplary Embodiment 1 denote the same components as those in Exemplary Embodiment 1, and a detailed description thereof will be omitted here.

The modified display control device includes a configuration in which the navigation function of the vehicle based on the positioning information by a global positioning system (GPS) and map data is added to display control device 20 described in Exemplary Embodiment 1. Like display control device 20 described above as a hardware, the modified display control device includes a computer or the like including memory and a processor, and further includes a GPS receiver. Further, in addition to the memory, a storage device such as a hard disk device, a transmitting and receiving device, and the like may be provided for acquiring and storing the map data. Since the navigation technology of the vehicle is a well-known technology, a detailed explanation will be omitted here. The modified display control device includes determination unit 400 and controller 500, and controls display unit 600 to generate a predetermined image for displaying information for guiding a route to a destination of the vehicle input to the driver, based on the recognition result information and GPS positioning information. In order to display information for guiding the route, the modified display control device specifies a point (for example, an intersection within 100 m ahead in the traveling direction) requiring guidance based on the GPS positioning information and the map data, regards the point as a predetermined subject, and generates information similar to the recognition result information shown in Exemplary Embodiment 1. Therefore, by treating the point (for example, an intersection) as the predetermined subject, each of determination unit 400 and controller 500 functions as follows. Hereinafter, an example treating an intersection as the predetermined subject will be described.

Determination unit 400 determines whether or not the intersection which is the predetermined subject corresponding to a point requiring guidance falls within the display range of the HUD, based on the recognition result information generated in the modified display control device and the estimated value of the depression angle.

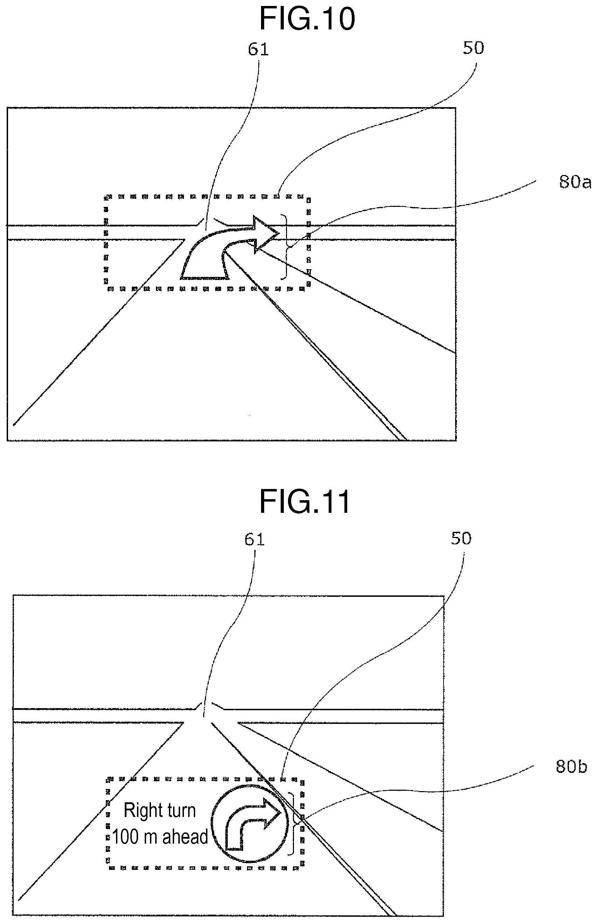

In a case where the predetermined subject (intersection) is determined to fall within the display range of the HUD by determination unit 400, controller 500 controls display unit 600 to generate a predetermined image representing a display object overlapped on the intersection that is supposed to appear on the actual scene as shown in FIG. 10, when displayed on the display medium. The position of the intersection that is supposed to appear on the actual scene is actually a position calculated from the positioning information, the map data, and the estimated value of the depression angle.

In the present embodiment, the display object shows information for guiding a route to the driver about the predetermined subject (an intersection). FIG. 10 shows a view from the driver's viewpoint with depression angle 51a shown in FIG. 3, for example. In FIG. 10, display object 80a overlapped on intersection 61 and showing a right turn arrow is displayed in display range 50 of the HUD. By display object 80a, the driver in the vehicle can recognize exactly which way to proceed at intersection 61 while viewing intersection 61.

On the other hand, in a case where determination unit 400 determines that the predetermined subject (an intersection) corresponding to a point requiring guidance does not fall within the display range of the HUD, controller 500 controls display unit 600 to generate the predetermined image that represents display object 80b showing the information for guiding the route to the driver in a manner different from display object 80a about intersection 61 that is supposed to appear on the actual scene as shown in FIG. 11, when displayed on the display medium. FIG. 11 shows a view from the driver's viewpoint with depression angle 51b shown in for example FIG. 4. In the case of FIG. 11, unlike the case of FIG. 10, because intersection 61 does not fall within the display range of the HUD when viewed from the driver's viewpoint, and an image cannot be generated so that the display object is displayed by being overlapped on intersection 61, an image that can be distinguished from the case where the display object is overlapped is generated. Display object 80b shown in FIG. 11 shows a character string indicating that the position of intersection 61 is 100 m ahead and an icon indicating a right turn. By display object 80b, the driver in the vehicle can recognize exactly which way to proceed at intersection 61.

Controller 500 of the modified display control device described above controls the display unit 600 to generate the predetermined image that represents the display object showing the guidance information about the predetermined subject (a predetermined point on the map, a building, or the like) in addition to the information for guiding the route, when displayed on the display medium.

As described above, according to the modified display system (modified display control device or the like) described in the present embodiment, like display system 10 of Exemplary Embodiment 1, it is possible to present useful information to the passenger even when the variation range of the height of the passenger's viewpoint in a moving object such as a vehicle and the like (for example, a driver's viewpoint) is large. Each of the modification examples described in Exemplary Embodiment 1 may be appropriately applied to the present embodiment.

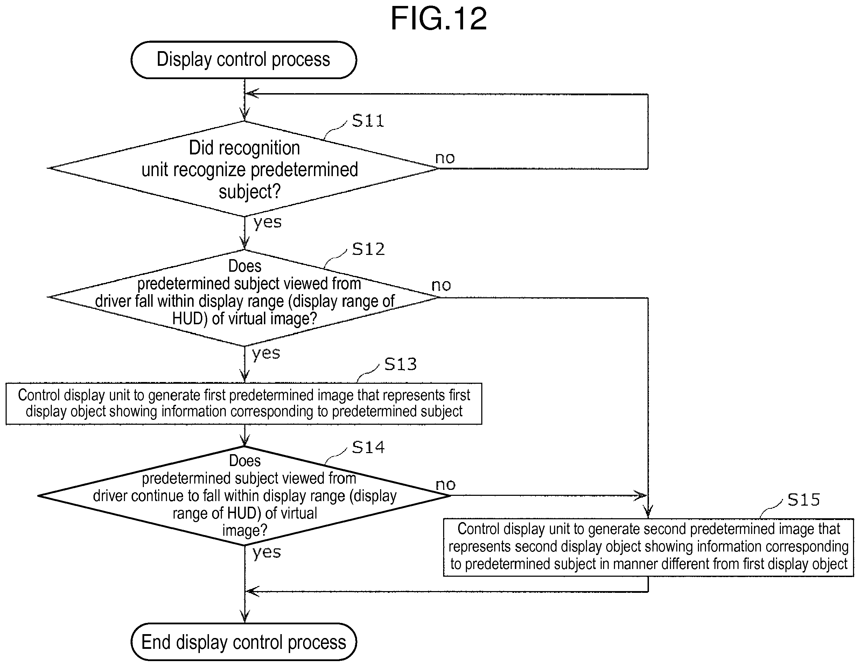

The display control process (see FIG. 9) described above may be modified as shown in FIG. 12, for example. A computer performing the functions of display control device 20 or the modified display control device executes the procedure of the process shown in FIG. 12 by executing the display control program. That is, in a case where recognition unit 200 recognizes the predetermined subject (step S11), the computer determines whether or not the predetermined subject viewed from the driver (the passenger in the moving object) falls within the display range (the display range of the HUD) of the virtual image, based on the position information of the predetermined subject recognized by recognition unit 200 and a first depression angle estimated by estimation unit 300 at a first timing when recognition unit 200 recognizes the predetermined subject (step S12). In a case where the predetermined subject is determined to fall within the display range of the virtual image in step S12 (step S12: YES), the computer controls display unit 600 to generate a first predetermined image that represents a first display object (a first display image) showing the information corresponding to the predetermined subject (step S13). For example, in the first predetermined image, the first display object may be displayed at a position of the predetermined subject viewed from the driver when displayed on the display medium. Further, in a case where the predetermined subject is determined not to fall within the display range of the virtual image in step S12 (step S12: NO), the computer controls display unit 600 to generate a second predetermined image that represents a second display object (a second display image) showing the information corresponding to the predetermined subject in a manner different from the first display object (step S15). Further, after the control in step S13, at a second timing such as when the depression angle of the estimation result by, for example, estimation unit 300 changes, the computer determines whether or not the predetermined subject viewed from the driver no longer falls within the display range of the virtual image, based on the position information of the predetermined subject recognized by recognition unit 200 and a second depression angle estimated by estimation unit 300 (step S14). In a case where the predetermined subject is determined no longer to fall within the display range of the virtual image in step S14 (step S14: NO), the computer controls display unit 600 to generate the second predetermined image that represents the second display object (the second display image) showing the information corresponding to the predetermined subject in a manner different from the first display object (step S15). Therefore, it is possible to display useful information to the driver even if the depression angle of the driver changes.

As described above, the display control device according to the one aspect of the present invention is a display control device in the display system including a recognition unit, a display unit, and an estimation unit. The recognition unit recognizes a predetermined subject existing in the foreground of the moving object. The display unit generates a predetermined image based on the recognition result of the recognition unit and displays the predetermined image on a display medium so that a virtual image is visible to the passenger in the moving object. The estimation unit estimates a depression angle when the virtual image is viewed from the passenger. The display control device includes a determination unit and a controller. The determination unit determines whether or not the predetermined subject viewed from the passenger falls within a display range of the virtual image based on the position information of the predetermined subject acquired from the recognition unit and the estimated value of the depression angle acquired from the estimation unit. In a case where the predetermined subject is determined to fall within the display range by the determination unit, the controller controls the display unit to generate a first predetermined image that represents a first display image showing the information corresponding to the predetermined subject when displayed on the display medium. On the other hand, in a case where the predetermined subject is determined not to fall within the display range by the determination unit, the controller controls the display unit to generate a second predetermined image that represents a second display image showing the information corresponding to the predetermined subject in a manner different from the first display image when displayed on the display medium. The first display image or the second display image is a display object formed with a mark such as a character string, a symbol, figure, an image, or the like. Further, the display range of the virtual image is a display range of the HUD, for example.

Therefore, it is possible to present useful information to the passenger even when the variation range of the height of the passenger's viewpoint in the moving object is large in the display system.

In a case where the controller causes the display unit to generate the first predetermined image representing the first display image, the controller causes the display unit to dispose the first display image in the first predetermined image so that the virtual image for the first display image appears at the predetermined position of the predetermined subject viewed from the passenger, based on the position information of the predetermined subject acquired from the recognition unit and the estimated value of the depression angle acquired from the estimation unit. On the other hand, in a case where the controller causes the display unit to generate the second predetermined image representing the second display image, the controller causes the display unit to define the second display image so as to include a specific mark expressing the position of the predetermined subject, based on the position information of the predetermined subject acquired from the recognition unit and the estimated value of the depression angle acquired from the estimation unit. Such control is preferable. Therefore, even if the predetermined subject is not included when the passenger observes the inside of the scope of the display medium, that is, even if the predetermined subject is outside the display range of the HUD when the passenger observes the predetermined subject, the passenger in the moving object can recognize where the predetermined subject (for example, an object to watch out for) is by the second display image.

The specific mark described above may be an arrow indicating the direction of the predetermined subject. The arrow may be sufficient as long as it is a figure having a shape pointing a specific direction, the tip of the arrow may not be necessarily sharp, and the arrow may be a figure having only the tip of the arrow (for example, a triangle). Therefore, even if the virtual image cannot be visible to the passenger by being overlapped on the predetermined subject, the passenger in the moving object will be able to easily recognize the position of the predetermined subject by the direction pointed by the arrow.

The first display image may not include a specific mark. Therefore, the passenger in the moving object can easily distinguish between the first display image displayed by being overlapped on the predetermined subject and the second display image displayed at a different position from the predetermined object, and properly grasp the situation of the foreground.

In a case where the controller causes the display unit to generate the first predetermined image representing the first display image, the controller causes the display unit to dispose the first display image in the first predetermined image so that the virtual image for the first display image appears at the predetermined subject position viewed from the passenger, based on the position information of the predetermined subject acquired from the recognition unit and the estimated value of the depression angle acquired from the estimation unit. On the other hand, in a case where the controller causes the display unit to generate the second predetermined image representing the second display image, the controller causes the display unit to dispose the second display image in the second predetermined image so that the virtual image for the second display image appears close to the predetermined subject position viewed from the passenger rather than the center of the display range of the virtual image, based on the position information of the predetermined subject acquired from the recognition unit and the estimated value of the depression angle acquired from the estimation unit. Such control is also preferable. Therefore, the passenger in the moving object will be able to easily recognize that the predetermined subject and the second display image are related.

The moving object may be a vehicle and carry the display control device. Therefore, it is possible to recognize useful information during the operation of the vehicle even if the height of the driver's viewpoint is high or low.

In addition, the display control program according to the one aspect of the present invention is executed by the computer in the display system described above. The program executes the computer to execute the following processes: a process of determining whether or not the predetermined subject viewed from the passenger falls within the display range of the virtual image based on the position information of the predetermined subject recognized by the recognition unit and a first depression angle estimated by the estimation unit at a first timing when the recognition unit recognizes the predetermined subject; a process of controlling the display unit to generate the first predetermined image that represents the first display image showing the information about the predetermined subject when displayed on the display medium in a case where the predetermined subject is determined to fall within the display range; and a process of controlling the display unit to generate the second predetermined image that represents the second display image showing the information about the predetermined subject in a manner different from the first display image when displayed on the display medium in a case where a second depression angle estimated by the estimation unit is different from the first depression angle and the predetermined subject is determined not to fall within the display range by the determination unit at a second timing different from the first timing. By installing and executing the display control program in the display system configured to include a computer, it is possible to present useful information to the passenger even if the variation range of the height of the passenger's viewpoint in the moving object is large.

### INDUSTRIAL APPLICABILITY

The present invention may be applied to a display control device for controlling the display of information provided to a passenger in a moving object such as a vehicle and the like.

### REFERENCE MARKS IN THE DRAWINGS

- 10: display system
- 20: display control device
- 50: display range
- 51a, 51b: depression angle
- 60: subject
- 61: intersection
- 70a, 70b, 80a, 80b: display object
- 100: sensor
- 200: recognition unit
- 300: estimation unit
- 400: determination unit
- 500: controller
- 600: display unit
- 610: LCD
- 620a: plane mirror
- 620b: recessed mirror
- 700: windshield (display medium)
- 800: virtual image
- 900: viewpoint

## Claims

1. A display system (10) including
a display control device (20),
a recognition unit (200) that recognizes a predetermined subject (60) existing in a foreground of a moving object,
a display unit (600) that generates a predetermined image based on a recognition result of the recognition unit (200) and displays the predetermined image within a display range limited to a certain extent on a display medium so that a virtual image (800) is visible to a passenger in the moving object, and
an estimation unit (300) that estimates a depression angle (51a) when the virtual image (800) is viewed from the passenger,
**characterized in that**
the display control device (20) comprising:
a determination unit (400) that determines whether or not the predetermined subject (60) viewed from the passenger falls within the display range (50) of the virtual image (800) based on position information of the predetermined subject (60) acquired from the recognition unit (200) and an estimated value of the depression angle (51a) acquired from the estimation unit (300), the estimated value of the depression angle being estimated based on the viewpoint of the passenger; and
a controller (500) that causes the display unit (600) to generate a first predetermined image that represents a first display image (70a, 80a) showing information corresponding to the predetermined subject (60) and to display the first display image (70a, 80a) overlapped on the predetermined subject (60) when the predetermined subject is displayed on the display medium in a case where the predetermined subject (60) is determined to fall within the display range (50) by the determination unit (400), and causes the display unit (600) to generate a second predetermined image that represents a second display image (70b, 80b) indirectly indicating the position of the predetermined subject (60) when the predetermined subject (60) is displayed on the display medium in a case where the predetermined subject (60) is determined not to fall within the display range (50) by the determination unit (400), and to display the second display image (70b, 80b) not overlapped on the predetermined subject (60), the first display image (70a, 80a) and the second display image (70b, 80b) being each displayed within the display range (50) of the virtual image (800).

2. The display system of Claim 1,
wherein, in a case where the controller (500) causes the display unit (600) to generate the second predetermined image representing the second display image (70b, 80b), the controller (500) causes the display unit (600) to define the second display image (70b, 80b) so as to include a specific mark expressing the position of the predetermined subject, based on the position information of the predetermined subject (60) acquired from the recognition unit (200) and the estimated value of the depression angle acquired from the estimation unit (300).

3. The display system of Claim 2,
wherein the specific mark is an arrow indicating a direction of the predetermined subject (60).

4. The display system of Claim 2,
wherein the first display image (70a, 80a) does not include the specific mark.

5. The display system of Claim 1,
wherein, in a case where the controller (500) causes the display unit (600) to generate the second predetermined image representing the second display image (70b, 80b), the controller (500) causes the display unit (600) to dispose the second display image (70b, 80b) in the second predetermined image so that the virtual image for the second display image (70b, 80b) appears closer to the position of the predetermined subject (60) viewed from the passenger rather than to a center of the display range of the virtual image, based on the position information of the predetermined subject (60) acquired from the recognition unit (200) and the estimated value of the depression angle acquired from the estimation unit (300).

6. The display system of any one of Claims 1 to 5,
wherein the moving object is a vehicle that carries the display system (10).

7. A display control program that causes a computer to execute processes in a display system including
a recognition unit (200) that recognizes a predetermined subject (60) existing in a foreground of a moving object,
a display unit (600) that generates a predetermined image based on a recognition result of the recognition unit and displays the predetermined image within a display range limited to a certain extent on a display medium so that a virtual image (800) is visible to a passenger in the moving object, and
an estimation unit (300) that estimates a depression angle when the virtual image (800) is viewed from the passenger,
**characterized in that**
the processes including a process of determining whether or not the predetermined subject (60) viewed from the passenger falls within the display range (50) of the virtual image (800) based on position information of the predetermined subject (60) recognized by the recognition unit (200) and a first depression angle (51a) estimated by the estimation unit (300) at a first timing when the recognition unit (200) recognizes the predetermined subject (60), the estimated value of the depression angle being estimated based on the viewpoint of the passenger,
a process of causing the display unit (600) to generate a first predetermined image that represents a first display image (70a, 80a) showing the information about the predetermined subject (60) and to display the first display image (70a, 80a) overlapped on the predetermined subject (60) when the predetermined subject (60) is displayed on the display medium in a case where the predetermined subject (60) is determined to fall within the display range (50) by the determination unit (400), and
a process of causing the display unit (600) to generate a second predetermined image that represents a second display image (70b, 80b) indirectly indicating the position of the predetermined subject (60) when the predetermined subject (60) is displayed on the display medium in a case where a second depression angle (51b) estimated by the estimation unit (300) is different from the first depression angle (51a) and the predetermined subject (60) is determined not to fall within the display range (50) at a second timing different from the first timing, the second display image (70b, 80b) being displayed not overlapped on the predetermined subject (60), the first display image (70a, 80a) and the second display image (70b, 80b) being each displayed within the display range (50) of the virtual image (800).

## Patentansprüche

1. Anzeigesystem (10), das Folgendes beinhaltet
eine Anzeigesteuervorrichtung (20),
eine Erkennungseinheit (200), die ein vorbestimmtes Subjekt (60) erkennt, das in einem Vordergrund eines sich bewegenden Objekts existiert,
eine Anzeigeeinheit (600), die auf Basis eines Erkennungsergebnisses der Erkennungseinheit (200) ein vorbestimmtes Bild erzeugt und das vorbestimmte Bild innerhalb eines Anzeigebereichs, der in einem gewissen Ausmaß begrenzt ist, auf einem Anzeigemedium derart anzeigt, dass in dem sich bewegenden Objekt für einen Passagier ein virtuelles Bild (800) sichtbar ist, und
eine Schätzeinheit (300), die einen Depressionswinkel (51a) schätzt, wenn das virtuelle Bild (800) vom Passagier betrachtet wird,
**dadurch gekennzeichnet, dass**
die Anzeigesteuervorrichtung (20) Folgendes umfasst:
eine Bestimmungseinheit (400), die auf Basis von Positionsinformationen des vorbestimmten Subjekts (60), die von der Erkennungseinheit (200) erfasst werden, und eines geschätzten Wertes des Depressionswinkels (51a), der von der Schätzeinheit (300) erfasst wird, bestimmt, ob das vorbestimmte Subjekt (60), das vom Passagier betrachtet wird, in den Anzeigebereich (50) des virtuellen Bildes (800) fällt oder nicht, wobei der geschätzte Wert des Depressionswinkels auf Basis des Blickpunkts des Passagiers geschätzt wird; und
eine Steuerung (500), die in einem Fall, in dem von der Bestimmungseinheit (400) bestimmt wird, dass das vorbestimmte Subjekt (60) in den Anzeigebereich (50) fällt, die Anzeigeeinheit (600) veranlasst, ein erstes vorbestimmtes Bild, das ein erstes Anzeigebild (70a, 80a) repräsentiert, das Informationen zeigt, die dem vorbestimmten Subjekt (60) entsprechen, zu erzeugen und das erste Anzeigebild (70a, 80a) auf dem vorbestimmten Subjekt (60) überlappt anzuzeigen, wenn das vorbestimmte Subjekt auf dem Anzeigemedium angezeigt wird, und in einem Fall, in dem die Bestimmungseinheit (400) bestimmt, dass das vorbestimmte Subjekt (60) nicht in den Anzeigebereich (50) fällt, die Anzeigeeinheit (600) veranlasst, ein zweites vorbestimmtes Bild, das ein zweites Anzeigebild (70b, 80b) repräsentiert, das die Position des vorbestimmten Subjekts (60) indirekt anzeigt, zu erzeugen, wenn das vorbestimmte Bild (60) auf dem Anzeigemedium angezeigt wird, und das zweite Anzeigebild (70b, 80b) auf dem vorbestimmten Subjekt (60) nicht überlappt anzuzeigen, wobei das erste Anzeigebild (70a, 80a) und das zweite Anzeigebild (70b, 80b) jeweils im Anzeigebereich (50) des virtuellen Bildes (800) angezeigt werden.

2. Anzeigesystem nach Anspruch 1,
wobei in einem Fall, in dem die Steuerung (500) die Anzeigeeinheit (600) veranlasst, das zweite vorbestimmte Bild, das das zweite Anzeigebild (70b, 80b) repräsentiert, zu erzeugen, die Steuerung (500) die Anzeigeeinheit (600) veranlasst, das zweite Anzeigebild (70b, 80b) zu definieren, um auf Basis der Positionsinformationen des vorbestimmten Subjekts (60), die von der Erkennungseinheit (200) erfasst werden, und des geschätzten Wertes des Depressionswinkels, der von der Schätzeinheit (300) erfasst wird, eine spezielle Markierung zu beinhalten, die die Position des vorbestimmten Subjekts ausdrückt.

3. Anzeigesystem nach Anspruch 2,
wobei die spezielle Markierung ein Pfeil ist, der eine Richtung des vorbestimmten Subjekts (60) anzeigt.

4. Anzeigesystem nach Anspruch 2,
wobei das erste Anzeigebild (70a, 80a) die spezielle Markierung nicht beinhaltet.

5. Anzeigesystem nach Anspruch 1,
wobei in einem Fall, in dem die Steuerung (500) die Anzeigeeinheit (600) veranlasst, das zweite vorbestimmte Bild, das das zweite Anzeigebild (70b, 80b) repräsentiert, zu erzeugen, die Steuerung (500) die Anzeigeeinheit (600) veranlasst, auf Basis der Positionsinformationen des vorbestimmten Subjekts (60), die von der Erkennungseinheit (200) erfasst werden, und des geschätzten Wertes des Depressionswinkels, der von der Schätzeinheit (300) erfasst wird, das zweite Anzeigebild (70b, 80b) im zweiten vorbestimmten Bild derart anzuordnen, dass das virtuelle Bild für das zweite Anzeigebild (70b, 80b) vom Passagier aus betrachtet der Position des vorbestimmten Subjekts (60) näher erscheint als eine Mitte des Anzeigebereichs des virtuellen Bildes.

6. Anzeigesystem nach einem der Ansprüche Anspruch 1 bis 5,
wobei das sich bewegende Objekt ein Fahrzeug ist, in dem sich das Anzeigesystem (10) befindet.

7. Anzeigesteuerprogramm, das einen Computer veranlasst, Prozesse in einem Anzeigesystem auszuführen, das Folgendes beinhaltet
eine Erkennungseinheit (200), die ein vorbestimmtes Subjekt (60) erkennt, das in einem Vordergrund eines sich bewegenden Objekts existiert,
eine Anzeigeeinheit (600), die auf Basis eines Erkennungsergebnisses der Erkennungseinheit ein vorbestimmtes Bild erzeugt und das vorbestimmte Bild innerhalb eines Anzeigebereichs, der in einem gewissen Ausmaß begrenzt ist, auf einem Anzeigemedium anzeigt, derart, dass in dem sich bewegenden Objekt für einen Passagier ein virtuelles Bild (800) sichtbar ist, und
eine Schätzeinheit (300), die einen Depressionswinkel schätzt, wenn das virtuelle Bild (800) vom Passagier betrachtet wird,
**dadurch gekennzeichnet, dass**
wobei die Prozesse einen Prozess des Bestimmens auf Basis von Positionsinformationen des vorbestimmten Subjekts (60), das von der Erkennungseinheit (200) erkannt wird, und eines ersten Depressionswinkels (51a), der von der Schätzeinheit (300) zu einer ersten Zeit geschätzt wird, wenn die Erkennungseinheit (200) das vorbestimmte Subjekt (60) erkennt, ob das vorbestimmte Subjekt (60), das vom Passagier betrachtet wird, in den Anzeigebereich (50) des virtuellen Bildes (800) fällt oder nicht, wobei der geschätzte Wert des Depressionswinkels auf Basis des Blickpunkts des Passagiers geschätzt wird,
einen Prozess des Veranlassens der Anzeigeeinheit (600) in einem Fall, in dem von der Bestimmungseinheit (400) bestimmt wird, dass das vorbestimmte Subjekt (60) in den Anzeigebereich (50) fällt, ein erstes vorbestimmtes Bild, das ein erstes Anzeigebild (70a, 80a) repräsentiert, das die Informationen über das vorbestimmte Subjekt (60) zeigt, zu erzeugen und das erste Anzeigebild (70a, 80a) auf dem vorbestimmten Subjekt (60) überlappt anzuzeigen, wenn das vorbestimmte Subjekt (60) auf dem Anzeigemedium angezeigt wird, und
einen Prozess des Veranlassens der Anzeigeeinheit (600) in einem Fall, in dem sich ein zweiter Depressionswinkel (51b), der von der Schätzeinheit (300) geschätzt wird, vom ersten Depressionswinkel (51a) unterscheidet und bestimmt wird, dass das vorbestimmte Subjekt (60) zu einer zweiten Zeit, die sich von der ersten Zeit unterscheidet, nicht in den Anzeigebereich (50) fällt, ein zweites vorbestimmtes Bild, das ein zweites Anzeigebild (70b, 80b) repräsentiert, das die Position des vorbestimmten Subjekts (60) indirekt anzeigt, wenn das vorbestimmte Subjekt (60) auf dem Anzeigemedium angezeigt wird, zu erzeugen, wobei das zweite Anzeigebild (70b, 80b) auf dem vorbestimmten Subjekt (60) nicht überlappt angezeigt wird, wobei das erste Anzeigebild (70a, 80a) und das zweite Anzeigebild (70b, 80b) jeweils im Anzeigebereich (50) des virtuellen Bildes (800) angezeigt werden.

## Revendications

1. Système d'affichage (10) incluant
un dispositif de commande d'affichage (20),
une unité de reconnaissance (200) qui reconnaît un sujet prédéterminé (60) existant dans un avant-plan d'un objet en mouvement,
une unité d'affichage (600) qui génère une image prédéterminée sur la base d'un résultat de reconnaissance de l'unité de reconnaissance (200) et affiche l'image prédéterminée à l'intérieur d'une plage d'affichage limitée jusqu'à une certaine mesure sur un support d'affichage de sorte qu'une image virtuelle (800) est visible pour un passager dans l'objet en mouvement, et
une unité d'estimation (300) qui estime un angle de dépression (51a) lorsque l'image virtuelle (800) est vue par le passager,
**caractérisé en ce que**
le dispositif de commande d'affichage (20) comprenant :
une unité de détermination (400) qui détermine si le sujet prédéterminé (60) vu par le passager se trouve ou non à l'intérieur de la plage d'affichage (50) de l'image virtuelle (800) sur la base d'informations de position du sujet prédéterminé (60) acquises par l'unité de reconnaissance (200) et d'une valeur estimée de l'angle de dépression (51a) acquise par l'unité d'estimation (300), la valeur estimée de l'angle de dépression étant estimée sur la base du point de vue du passager ; et
un contrôleur (500) qui amène l'unité d'affichage (600) à générer une première image prédéterminée qui représente une première image d'affichage (70a, 80a) présentant des informations correspondant au sujet prédéterminé (60) et à afficher la première image d'affichage (70a, 80a) superposée sur le sujet prédéterminé (60) lorsque le sujet prédéterminé est affiché sur le support d'affichage dans un cas où le sujet prédéterminé (60) est déterminé comme se trouvant à l'intérieur de la plage d'affichage (50) par l'unité de détermination (400), et amène l'unité d'affichage (600) à générer une seconde image prédéterminée qui représente une seconde image d'affichage (70b, 80b) indiquant indirectement la position du sujet prédéterminé (60) lorsque le sujet prédéterminé (60) est affiché sur le support d'affichage dans un cas où le sujet prédéterminé (60) est déterminé comme ne se trouvant pas à l'intérieur de la plage d'affichage (50) par l'unité de détermination (400), et à afficher la seconde image d'affichage (70b, 80b) non superposée sur le sujet prédéterminé (60), la première image d'affichage (70a, 80a) et la seconde image d'affichage (70b, 80b) étant chacune affichées à l'intérieur de la plage d'affichage (50) de l'image virtuelle (800).

2. Système d'affichage selon la revendication 1,
dans lequel, dans un cas où le contrôleur (500) amène l'unité d'affichage (600) à générer la seconde image prédéterminée représentant la seconde image d'affichage (70b, 80b), le contrôleur (500) amène l'unité d'affichage (600) à définir la seconde image d'affichage (70b, 80b) de manière à inclure une marque spécifique exprimant la position du sujet prédéterminé, sur la base des informations de position du sujet prédéterminé (60) acquises par l'unité de reconnaissance (200) et de la valeur estimée de l'angle de dépression acquise par l'unité d'estimation (300).

3. Système d'affichage selon la revendication 2,
dans lequel la marque spécifique est une flèche indiquant une direction du sujet prédéterminé (60).

4. Système d'affichage selon la revendication 2,
dans lequel la première image d'affichage (70a, 80a) n'inclut pas la marque spécifique.

5. Système d'affichage selon la revendication 1,
dans lequel, dans un cas où le contrôleur (500) amène l'unité d'affichage (600) à générer la seconde image prédéterminée représentant la seconde image d'affichage (70b, 80b), le contrôleur (500) amène l'unité d'affichage (600) à disposer la seconde image d'affichage (70b, 80b) dans la seconde image prédéterminée de sorte que l'image virtuelle pour la seconde image d'affichage (70b, 80b) apparaît plus proche de la position du sujet prédéterminé (60) vu par le passager plutôt que d'un centre de la plage d'affichage de l'image virtuelle, sur la base des informations de position du sujet prédéterminé (60) acquises par l'unité de reconnaissance (200) et de la valeur estimée de l'angle de dépression acquise par l'unité d'estimation (300).

6. Système d'affichage selon l'une quelconque des revendications 1 à 5,
dans lequel l'objet en mouvement est un véhicule qui porte le système d'affichage (10).

7. Programme de commande d'affichage qui amène un ordinateur à exécuter des processus dans un système d'affichage incluant
une unité de reconnaissance (200) qui reconnaît un sujet prédéterminé (60) existant dans un avant-plan d'un objet en mouvement,
une unité d'affichage (600) qui génère une image prédéterminée sur la base d'un résultat de reconnaissance de l'unité de reconnaissance et affiche l'image prédéterminée à l'intérieur d'une plage d'affichage limitée jusqu'à une certaine mesure sur un support d'affichage de sorte qu'une image virtuelle (800) est visible pour un passager dans l'objet en mouvement, et
une unité d'estimation (300) qui estime un angle de dépression lorsque l'image virtuelle (800) est vue par le passager,
**caractérisé en ce que**
les processus incluant un processus consistant à déterminer si le sujet prédéterminé (60) vu par le passager se trouve ou non à l'intérieur de la plage d'affichage (50) de l'image virtuelle (800) sur la base d'informations de position du sujet prédéterminé (60) reconnu par l'unité de reconnaissance (200) et d'un premier angle de dépression (51a) estimé par l'unité d'estimation (300) à un premier instant auquel l'unité de reconnaissance (200) reconnaît le sujet prédéterminé (60), la valeur estimée de l'angle de dépression étant estimée sur la base du point de vue du passager,
un processus consistant à amener l'unité d'affichage (600) à générer une première image prédéterminée qui représente une première image d'affichage (70a, 80a) présentant les informations relatives au sujet prédéterminé (60) et à afficher la première image d'affichage (70a, 80a) superposée sur le sujet prédéterminé (60) lorsque le sujet prédéterminé (60) est affiché sur le support d'affichage dans un cas où le sujet prédéterminé (60) est déterminé comme se trouvant à l'intérieur de la plage d'affichage (50) par l'unité de détermination (400), et
un processus consistant à amener l'unité d'affichage (600) à générer une seconde image prédéterminée qui représente une seconde image d'affichage (70b, 80b) indiquant indirectement la position du sujet prédéterminé (60) lorsque le sujet prédéterminé (60) est affiché sur le support d'affichage dans un cas où un second angle de dépression (51b) estimé par l'unité d'estimation (300) est différent du premier angle de dépression (51a) et le sujet prédéterminé (60) est déterminé comme ne se trouvant pas à l'intérieur de la plage d'affichage (50) à un second instant différent du premier instant, la seconde image d'affichage (70b, 80b) étant affichée en n'étant pas superposée sur le sujet prédéterminé (60), la première image d'affichage (70a, 80a) et la seconde image d'affichage (70b, 80b) étant chacune affichées à l'intérieur de la plage d'affichage (50) de l'image virtuelle (800).
